# EUROPEAN PATENT APPLICATION

(11) **EP 4 841 241 A1**
(43) Date of publication of application: **18.11.2026**
(21) Application number: 26178143.9
(22) Date of filing: 12.05.2026
(51) Int. Cl.: G01N 21/25, F21K 9/20, F21K 9/65, G01J 3/00, G01N 21/31, G01N 21/33, G01N 21/359, G01N 21/3563

(54) **DEVICE AND LIGHTING SYSTEM FOR MULTIBAND IMAGING OF ARTISTIC MANUFACTURED ARTICLES**

(30) Priority: 16.05.2025 IT 202500011104
(71) Applicant: Iannaccone, Roberta, 50127 Firenze (FI) (IT)
(72) Inventor: Iannaccone, Roberta, 50127 Firenze (FI) (IT)
(74) Representative: Grana, Daniele

(57) **Abstract**

The lighting device (1) for multiband imaging of artistic manufactured articles comprises:
- one supporting body (2);
- a first lighting assembly (3, 4) associated with the supporting body (2) and adapted to emit at least one relevant electromagnetic radiation falling within the infrared band;
- a second lighting assembly (5, 6, 7) associated with the supporting body (2) and adapted to emit at least one relevant electromagnetic radiation falling within the visible band;
- a third lighting assembly (8) associated with the supporting body (2) and adapted to emit at least one relevant electromagnetic radiation falling within the ultraviolet band;
where the lighting assemblies (3, 4, 5, 6, 7, 8) are adapted to emit the electromagnetic radiation where an artistic manufactured article to be analyzed through multiband imaging is located.

## Description

### Technical Field

The present invention relates to a lighting device and system for multiband imaging of artistic manufactured articles.

### Background Art

In the field of cultural heritage, in addition to activities related to the restoration and maintenance of works of art-aimed at the recovery, restoration, and conservation of historical and artistic manufactured articles such as architectural works, manuscripts, and paintings-scientific research is also conducted to understand and study the constituent materials and construction techniques.

In order to identify and develop the most appropriate interventions for conservation, enhancement, and restoration, it is necessary to have a thorough understanding of the materials, techniques, and state of conservation of the artistic manufactured article to work on.

In this context, a specific technique for characterizing artistic manufactured articles involves acquiring images of the surface of the work under investigation at various wavelengths of the electromagnetic spectrum using specialized photographic techniques.

This set of investigative techniques is known as multiband imaging (MBI) and is of the non-invasive type, meaning it allows for the investigation of a manufactured article's compositional characteristics without altering or directly intervening thereon.

The technique can be performed on-site, eliminating the need to move the artistic manufactured article from its exhibition or storage location.

During the acquisition of the various images using the multiband imaging (MBI) technique, the surface is exposed to a specific range of radiation (band) within the electromagnetic spectrum (specifically: near-ultraviolet, visible, and near-infrared), subsequently collecting and recording the radiation reflected or re-emitted by the surface (the phenomenon of luminescence).

This reflection or emission is captured by the silicon sensor inside the camera.

From the images acquired using this particular investigative technique, it is, for example, possible to distinguish the different materials used to create an artistic manufactured article and/or obtain information on the conservation technique and history of the work itself.

For example, the information that can be obtained is extensive and ranges from the characterization of the pigments used, to the documentation of pentimenti or preparatory drawings, to the ability to highlight retouching and restoration interventions, to the documentation of the presence of protective varnishes and the state of conservation of the surface.

The most well-known and widely used techniques are: reflected ultraviolet (UVR), ultraviolet-induced luminescence (UVL), visible-light-induced visible luminescence (VIVL), visible-light-induced luminescence (VIL), and near-infrared reflection (NIR), in addition to photographic documentation in visible light.

The instrumentation used to set up the multiband imaging (MBI) technique generally consists of a variety of lighting devices that differ based on the band of the electromagnetic spectrum they emit.

A camera of the commercial type is used to capture the radiation reflected or emitted from the surface; its internal IFC/AA filter is removed, and it is provided with various photographic filters (positioned in front of the camera lens) depending on the radiation band to be captured.

The table below outlines the technologies and instruments currently used in multiband imaging (MBI).

| Technique | Emitted radiation | Recorded radiation | Type of light | Filter on the lens |
|---|---|---|---|---|
| UVR | ultraviolet | ultraviolet | Ultraviolet radiation emitters (BLB tubes - halogen lamps) | Low-pass filter up to 390 nm |
| UVL | ultraviolet | visible | Ultraviolet radiation emitters (BLB tubes - halogen lamps) | Bandpass filter 400-720 nm |
| VIVL | visible | visible | Emitters in the three individual RGB channels | Visible bandpass filters |
| VIL | visible | infrared | Visible radiation emitter | High-pass filter above 720 nm |
| NIR | infrared | infrared | Infrared radiation emitters (halogen or filament lamps) | High-pass filter above 720 nm |

However, the use of standard equipment for analysis using the multiband imaging (MBI) technique is associated with certain drawbacks.

First of all, the light radiation sources used are not specifically designed for this type of manufactured article technique analysis but are commercial lamps that have been adapted for this purpose.

Commercial lamps generally emit radiation fluxes that belong to different bands of the electromagnetic spectrum.

An example of this is the case where one wishes to acquire ultraviolet luminescence images; most commercially available LED lamps emit in the range of the electromagnetic spectrum which is centered around 380-390 nm, which overlaps with the first part of the visible spectrum, corresponding to violet-blue colors.

Imaging using this type of lamp, consequently, can lead to an incorrect interpretation of the luminescence being captured, usually resulting in an overestimation of the phenomenon.

This occurs because much of the emitted and reflected radiation passes through the photographic filter, which has a transmittance close to 100% at visible wavelengths; in other words, all radiation striking the filter passes through it without being dimmed.

In the case of flashes, however, the quality of the emission is primarily related to two factors: the quality of the filters used and the type of lamp employed.

Flashes typically use halogen bulbs, designed for commercial photography where the focus is on the light's color rendering rather than scientific data.

Often, these bulbs are modified to minimize ultraviolet emission, which causes a loss of sharpness in photos.

Conversely, in near-infrared imaging, the emitted component is very high, leading to the opposite problem of an excessively powerful flux.

In other words, the artistic manufactured article is struck not only by the light radiation within the desired wavelength band but also by other parasitic radiation-that is, radiation from other bands not considered relevant at that specific moment of acquisition.

Inevitably, this unfortunate circumstance means that the images acquired of the illuminated artistic manufactured article may be distorted and may give rise to incorrect interpretations regarding the type of materials from which the artistic manufactured article is made, leading to the use of imprecise or even erroneous restoration techniques and methodologies.

Furthermore, the results obtained cannot be compared with those obtained by other research institutions or universities, which significantly limits the ability for industry professionals to objectively compare their findings with one another.

This issue can mean that, in order to obtain accurate images, it is sometimes necessary to use multiple filters to be placed on the camera lens to eliminate the so-called parasitic radiation.

It is clear that such a multitude of lamps and filters significantly complicates the use of this technique by the operators, especially newly trained ones who are just getting started with this equipment, thereby undermining its ease of use and the reliability of the data obtained.

In fact, during the image acquisition phase, it may be necessary to set up multiple lamps and/or filters, thus significantly complicating the execution of the entire process and prolonging its duration.

Furthermore, the set of lamps and filters that may be required must be moved and transported to the site where the artistic manufactured article to be examined is located. In this regard, it is important to note that the artistic manufactured articles to be analyzed are not always located in an easily accessible place, such as e.g. a museum hall, but are frequently situated in locations that are difficult to reach, such as e.g. an archaeological site or the ceiling of a church.

In addition to the aforementioned issues, there is a further drawback related to the high cost of the filters, which universities and public institutions are often unable to afford.

### Description of the Invention

The main aim of the present invention is to provide for a lighting device and system for multiband imaging of artistic manufactured articles that enable the production of reliable and objective results regarding the characterization of an artistic manufactured article. A further object of the present invention is to provide for a lighting device and system for multiband imaging of artistic manufactured articles that are compact, easy to handle, and easily transportable.

Another object of the present invention is to provide for a lighting device and system for multiband imaging of artistic manufactured articles that can be used in a practical and convenient manner, including potentially via remote operation.

Another object of the present invention is to provide for a lighting device and system for multiband imaging of artistic manufactured articles that allow the aforementioned drawbacks of the prior art to be overcome within the framework of a simple, rational, easy and effective to use, as well as affordable solution.

The aforementioned objects are achieved by this lighting device for multiband imaging of artistic manufactured articles having the characteristics of claim 1.

The aforementioned objects are also achieved by this lighting system for multiband imaging of artistic manufactured articles having the characteristics of claim 12.

### Brief Description of the Drawings

Other characteristics and advantages of the present invention will become more apparent from the description of some preferred, but not exclusive, embodiments of a lighting device and system for multiband imaging of artistic manufactured articles, illustrated by way of an indicative, yet non-limiting example, in the attached drawings, wherein:
Figure 1 is an axonometric view of a device according to the invention and according to a first embodiment;
Figure 2 is an axonometric, partly exploded view of some components of the device of Figure 1;
Figure 3 is a front view of some components of the device of Figure 1;
Figure 4 is an axonometric view, from a different angle than that of Figure 1 and Figure 2, of some components of the device according to the invention and according to the first embodiment;
Figure 5 is a front view of a device according to the invention and according to a second embodiment;
Figure 6 is an axonometric and rear view of the device shown in Figure 5;
Figure 7 is a partly exploded front axonometric view of the device shown in Figure 5;
Figures 8 and 9 are axonometric views of the device of Figure 5 in which, in Figure 8 and Figure 9 respectively, the cover element is positioned at a first position of use and at a second position of use;
Figure 10 is a schematic view of a system according to the invention.

### Embodiments of the Invention

With particular reference to these figures, reference numeral 1 globally denotes a lighting device for multiband imaging of artistic manufactured articles.

For the purposes of this disclosure, it is assumed that the device 1 may be used during scientific investigations aimed at characterizing an artistic manufactured article, in particular during analysis sessions of such manufactured articles based on the multiband imaging (MBI) technique.

In this disclosure, the term "artistic manufactured article" refers to an object of special artistic, historical, and cultural significance, such as a work of art, a monument, an architectural work, a manuscript, a painting, etc.

Investigations to characterize artistic manufactured articles are typically conducted when it is necessary to maintain and/or restore the manufactured article, with the aim of identifying the intervention technique best suited to the nature of the manufactured article itself.

However, there are also other cases in which such investigations are conducted, such as when one wishes to expand and deepen understanding of the techniques and materials used in an artistic manufactured article or by a specific artist.

As is well known and as has been extensively described in the introduction to this disclosure, the multiband imaging (MBI) technique involves acquiring multiple images of an artistic manufactured article at different wavelengths of the electromagnetic spectrum.

Through these images, it is possible to investigate the artistic characteristics of the artistic manufactured article, such as the various materials used in its creation, the pigments employed, the presence of retouching, the presence of varnishes, etc.

The device 1 is used to illuminate the artistic manufactured article to be analyzed, that is, to irradiate it with one or more types of radiation from one or more bands of the electromagnetic spectrum.

The device 1 according to the invention comprises:
- at least one supporting body 2;
- at least a first lighting assembly 3, 4 associated with the supporting body 2 and adapted to emit at least one relevant electromagnetic radiation falling within the infrared band;
- at least a second lighting assembly 5, 6, 7 associated with the supporting body 2 and adapted to emit at least one relevant electromagnetic radiation falling within the visible band;
- at least a third lighting assembly 8 associated with the supporting body 2 and adapted to emit at least one relevant electromagnetic radiation falling within the ultraviolet band;
wherein the lighting assemblies 3, 4, 5, 6, 7, 8 are adapted to emit the electromagnetic radiation where an artistic manufactured article to be analyzed through multiband imaging is located.

Usefully, the first lighting assembly 3, 4 comprises a plurality of first lighting devices 3, each of the first lighting devices 3 being adapted to emit a relevant electromagnetic radiation falling within the infrared band and having a wavelength of between 750 nm and 940 nm.

Advantageously, the first lighting assembly 3, 4 comprises a plurality of second lighting devices 4, each of the second lighting devices 4 being adapted to emit a relevant electromagnetic radiation falling within the infrared band and having a wavelength of between 750 nm and 940 nm.

Usefully, the second lighting assembly 5, 6, 7 comprises a plurality of third lighting devices 5, each of the third lighting devices 5 being adapted to emit a relevant electromagnetic radiation in the visible band and in the green channel, a plurality of fourth lighting devices 6, each of the fourth lighting devices 6 being adapted to emit a relevant electromagnetic radiation in the visible band and in the blue channel, and a plurality of fifth lighting devices 7, each of the fifth lighting devices 7 being adapted to emit a relevant electromagnetic radiation in the visible band and in the red channel. Advantageously, the third lighting assembly 8 comprises a plurality of sixth lighting devices 8, each of the sixth lighting devices 8 being adapted to emit a relevant electromagnetic radiation in the ultraviolet band and having a wavelength equal to 365 nm.

The device 1 according to the invention allows for the selective emission of the different electromagnetic radiations which are used to light up the artistic manufactured article to be analyzed, with a controlled emission within the optimal electromagnetic band and with a very narrow and well-defined energy peak.

This allows improving the quality and reliability of the photographs taken of the artistic manufactured article during the implementation of the multiband imaging technique.

Furthermore, the device 1 according to the present invention, thanks to the presence of the supporting body 2, on which the various lighting devices 3, 4, 5, 6, 7, and 8 are mounted, allows for different light sources in a single compact and easy-to-handle solution. These sources can be used to light up the artistic manufactured article during the corresponding material characterization analysis.

Furthermore, the device 1 is of the portable type, meaning it can be easily displaced to the location of the artistic manufactured article to be analyzed.

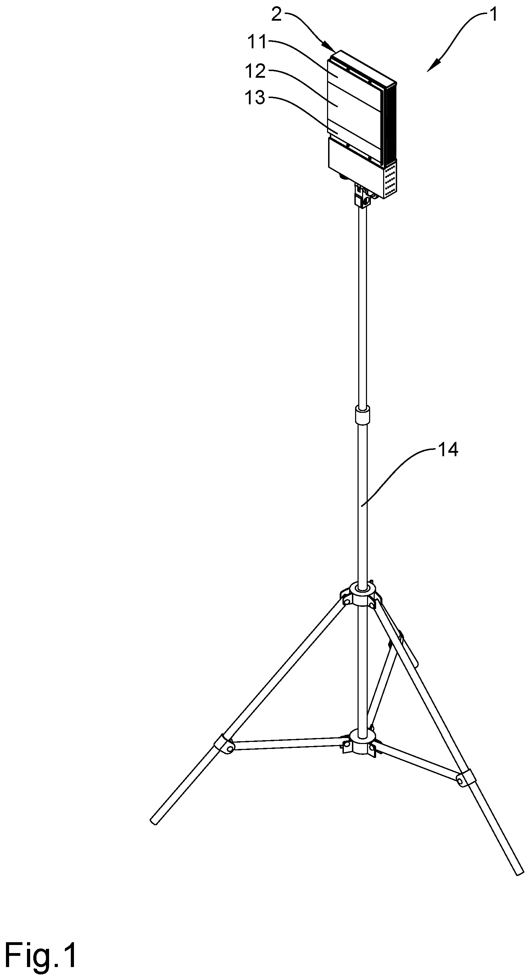

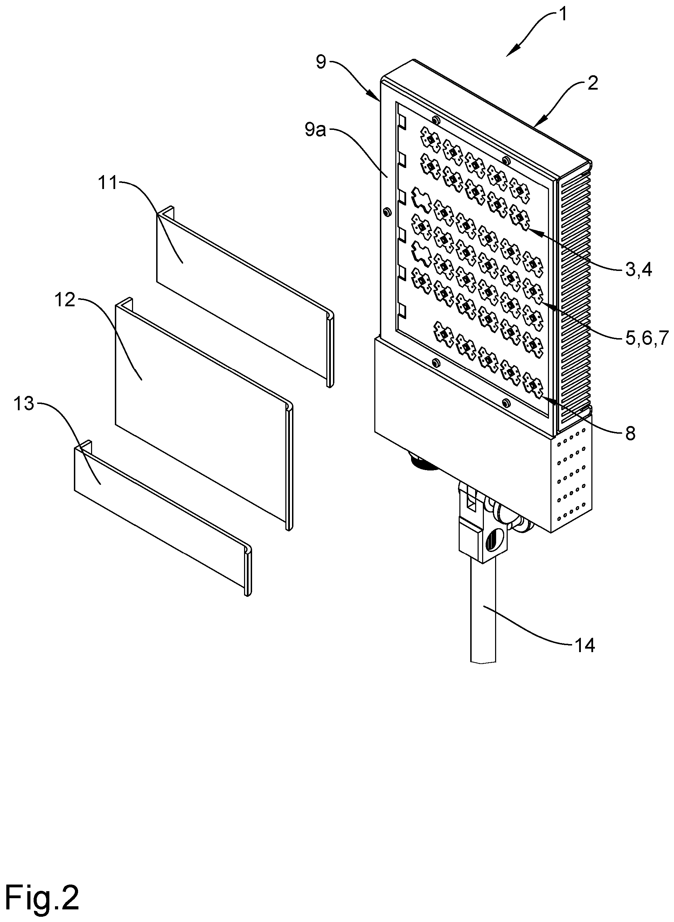

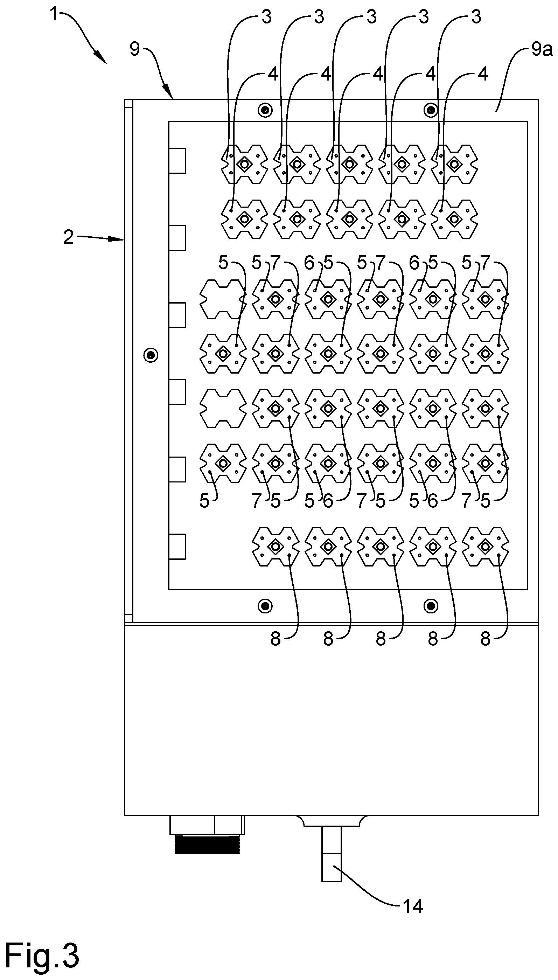

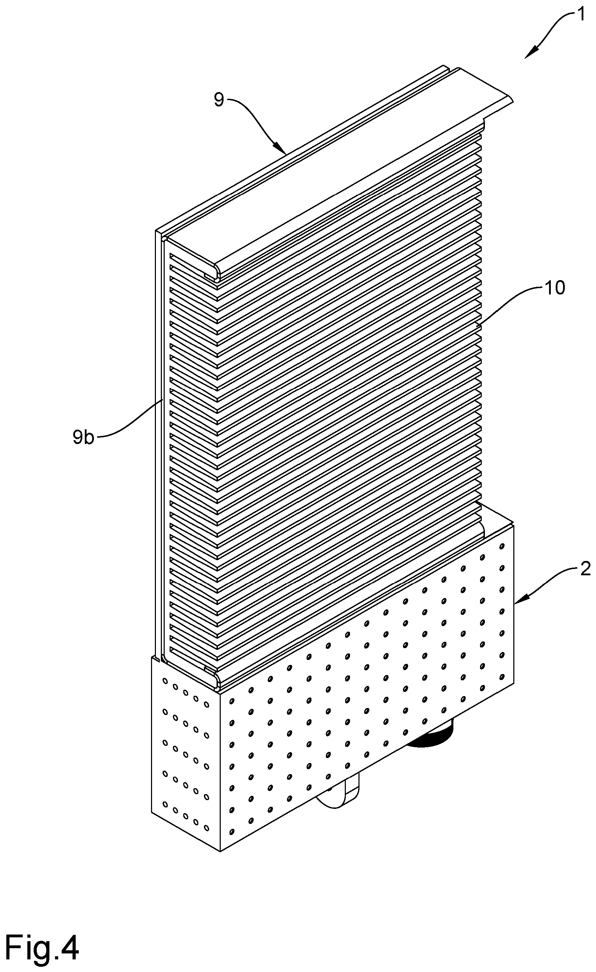

According to a particular embodiment of the device 1, shown in Figures 1 to 4, the lighting devices 3, 4, 5, 6, 7, and 8 are associated with the supporting body 2 according to a positioning matrix, the positioning matrix being of the type:

| | | | | | |
|---|---|---|---|---|---|
| | first lighting device (3) | first lighting device (3) | first lighting device (3) | first lighting device (3) | first lighting device (3) |
| | second lighting device (4) | second lighting device (4) | second lighting device (4) | second lighting device (4) | second lighting device (4) |
| | third lighting device (5) | fourth lighting device (6) | third lighting device (5) | fourth lighting device (6) | third lighting device (5) |
| third lighting device (5) | fifth lighting device (7) | third lighting device (5) | fifth lighting device (7) | third lighting device (5) | fifth lighting device (7) |
| | third lighting device (5) | fourth lighting device (6) | third lighting device (5) | fourth lighting device (6) | third lighting device (5) |
| third lighting device (5) | fifth lighting device (7) | third lighting device (5) | fifth lighting device (7) | third lighting device (5) | fifth lighting device (7) |
| | sixth lighting device (8) | sixth lighting device (8) | sixth lighting device (8) | sixth lighting device (8) | sixth lighting device (8) |

In other words, with reference to the possible embodiment shown in the figures, the positioning matrix of the lighting devices 3, 4, 5, 6, 7, 8 on the supporting body 2 comprises seven lines and six columns.

Preferably, the lighting devices 3, 4, 5, 6, 7, 8 are arranged on the supporting body 2 according to the pattern explained below.

The first lighting devices 3 are arranged in succession to define a first row, the first row coinciding with a first line of the positioning matrix.

Specifically, the device 1 shown in Figures 1 to 4 comprises five first lighting devices 3.

The second lighting devices 4 are arranged in succession to define a second row, the second row coinciding with a second line of the positioning matrix.

Specifically, the device 1 shown in Figures 1 to 4 comprises five second lighting devices 4.

Each first lighting device 3 is arranged substantially aligned with a respective second lighting device 4 along a column of the positioning matrix.

Some of the third lighting devices 5 and some of the fourth lighting devices 6 are arranged in succession and alternately to define a third row, the third row coinciding with a third line of the positioning matrix.

With reference to Figures 1 to 4, one of the outer cells of the third line of the positioning matrix is empty.

Some of the third lighting devices 5 and some of the fifth lighting devices 7 are arranged in succession and alternately to define a fourth row, the fourth row coinciding with a fourth line of the positioning matrix.

The fourth line of the positioning matrix does not comprise any empty cells.

Some of the third lighting devices 5 and the remaining fourth lighting devices 6 are arranged in succession and alternately to define a fifth row, the fifth row coinciding with a fifth line of the positioning matrix.

With reference to Figures 1 through 4, one of the outer cells of the fifth line of the positioning matrix is empty.

With reference to the matrix pattern introduced above, the empty outer cell of the fifth line is substantially aligned with the empty outer cell of the third line, of the second line, and of the first line.

The third line of the positioning matrix is substantially identical to the fifth line of the positioning matrix.

The remaining third lighting devices 5 and the remaining fifth lighting devices 7 are arranged in succession and alternately to define a sixth row, the sixth row coinciding with a sixth line of the positioning matrix.

The sixth line of the positioning matrix does not comprise any empty cells.

The fourth line of the positioning matrix is substantially identical to the sixth line of the positioning matrix.

The sixth lighting devices 8 are arranged in succession to define a seventh row, the seventh row coinciding with a seventh line of the positioning matrix.

The first lighting devices 3, which emit an electromagnetic radiation in the infrared band with a wavelength of between 750 nm and 940 nm, are arranged in alignment along the first row.

The second lighting devices 4, which emit an electromagnetic radiation in the infrared band with a wavelength of between 750 nm and 940 nm, are arranged in alignment along the second row.

The sixth lighting devices 8, which emit an electromagnetic radiation in the ultraviolet band with a wavelength equal to 365 nm, are arranged in alignment along the seventh row.

The third lighting devices 5, the fourth lighting devices 6, and the fifth lighting devices 7, which emit radiation in the visible band, have been grouped in the third row, the fourth row, the fifth row, and the sixth row.

According to this particular embodiment shown in Figures 1 to 4, when the artistic manufactured article is to be lighted up with a light beam in the visible band and in the white channel, the third lighting devices 5, the fourth lighting devices 6, and the fifth lighting devices 7 are activated simultaneously.

Thanks to the aforementioned technical expedients, it is possible to achieve a light flux that strikes the outer surface of the artistic manufactured article evenly, thus limiting the creation of shadowed areas and providing an even white light beam when the third lighting devices 5, the fourth lighting devices 6, and the fifth lighting devices 7 are activated simultaneously, while adjusting the intensity of the light beam emitted by each of the lighting devices 5, 6, 7.

According to a possible embodiment of the device 1, not shown in the figures, the second lighting assembly 5, 6, 7 comprises a plurality of auxiliary lighting devices, each of the auxiliary lighting devices being adapted to emit a relevant electromagnetic radiation in the visible band and in the white channel.

According to this particular embodiment of the device 1, the second lighting assembly 5, 6, 7 comprises a single lighting body containing four subdivisions: one for the visible band and the red channel, one for the visible band and the green channel, one for the visible band and the blue channel, and one for the visible band in the white channel.

In other words, according to this particular embodiment, when the artistic manufactured article is to be lighted up with a light beam in the visible band and the white light, only the auxiliary lighting devices are activated.

This particular technical expedient allows improving the quality of images that can be taken of the artistic manufactured article, since the latter is lighted up by a white light radiation with a high color rendering index (CRI) compared to the case wherein the same white light radiation is obtained by superimposing and modulating the various red, green, and blue light radiations.

The characteristics described in the remainder of this disclosure should be considered common to both of the embodiments described above.

Preferably, the lighting devices 3, 4, 5, 6, 7, 8 are of the LED type.

For example, the lighting devices 3, 4, 5, 6, 7, and 8 are LEDs built using Thrive technology.

Thrive technology LEDs consist of small semiconductors that convert electrical energy into light with high efficiency. At the core of the system is an LED chip mounted on heat-dissipating substrates, such as aluminum, which help reduce the heat generated. A transparent lens protects the chip and diffuses the light evenly, while dedicated electronic circuits control light intensity and power consumption, ensuring long life and stable performance over time.

Conveniently, the supporting body 2 comprises one plate-shaped element 9 defining a plurality of housing recesses, each of the housing recesses being adapted to contain a respective lighting device 3, 4, 5, 6, 7, 8.

The housing recesses are arranged on the plate-shaped element 9 according to the positioning matrix described above.

Advantageously, the plate-shaped element 9 comprises a first face 9a, facing outward in use, and a second face 9b opposite the first face 9a, the lighting devices 3, 4, 5, 6, 7, 8 being accessible from the outside through the first face 9a.

Usefully, the supporting body 2 comprises heat dissipation means 10 associated with the second face 9b and adapted to promote the cooling of the lighting devices 3, 4, 5, 6, 7, 8 during the emission of the electromagnetic radiation.

Preferably, the supporting body 2 is manufactured by turning a metal block.

During the aforementioned machining phase, the plate-shaped element 9, the housing recesses, and the heat dissipation means 10 are formed.

Subsequently, the lighting devices 3, 4, 5, 6, 7, 8 are assembled to the supporting body 2 and, more specifically, are inserted into their respective housing recesses. Advantageously, the device 1 comprises dimming means 11, 12, 13 of the lighting assemblies 3, 4, 5, 6, 7, 8, comprising:
- at least a first dimming body 11 associated with the supporting body 2 in a removable manner where the first lighting assembly 3, 4 is located;
- at least a second dimming body 12 associated with the supporting body 2 in a removable manner where the second lighting assembly 5, 6, 7 is located;
- at least a third dimming body 13 associated with the supporting body 2 in a removable manner where the third lighting assembly 8 is located.

With reference to the specific embodiment shown in Figures 1 to 4, the dimming bodies 11, 12, 13 have a substantially plate-like conformation.

The presence of the dimming means 11, 12, 13 can be very useful since the emission of light radiation by one of either the first lighting assembly 3, 4, the second lighting assembly 5, 6, 7, or the third lighting assembly 8 may be partly affected and/or distorted by the light emission that may be reflected by the other lighting assemblies 3, 4, 5, 6, 7, 8 that are not active at that moment.

Preferably, the device 1 comprises standing means 14 adapted to allow the device 1 to stand on a supporting surface, the standing means 14 being associated with the supporting body 2.

In use, the standing means 14 are positioned on a supporting surface which is, e.g., the floor.

For example, the standing means 14 are of the tripod type or a photographic-style stand. Usefully, the standing means 14 are associated with the supporting body 2 in a removable manner.

In this way, it is possible to couple/uncouple the standing means 14 to/from the supporting body 2 depending on the investigation requirements.

Preferably, the device 1 comprises a filtering element (not shown in the figures for the sake of simplicity) placeable where the third lighting assembly 8 is located and adapted to improve the emission of the electromagnetic radiation by the third lighting assembly 8.

The filtering element is associated with the supporting body 2 in a removable manner, where the third lighting assembly 8 is located.

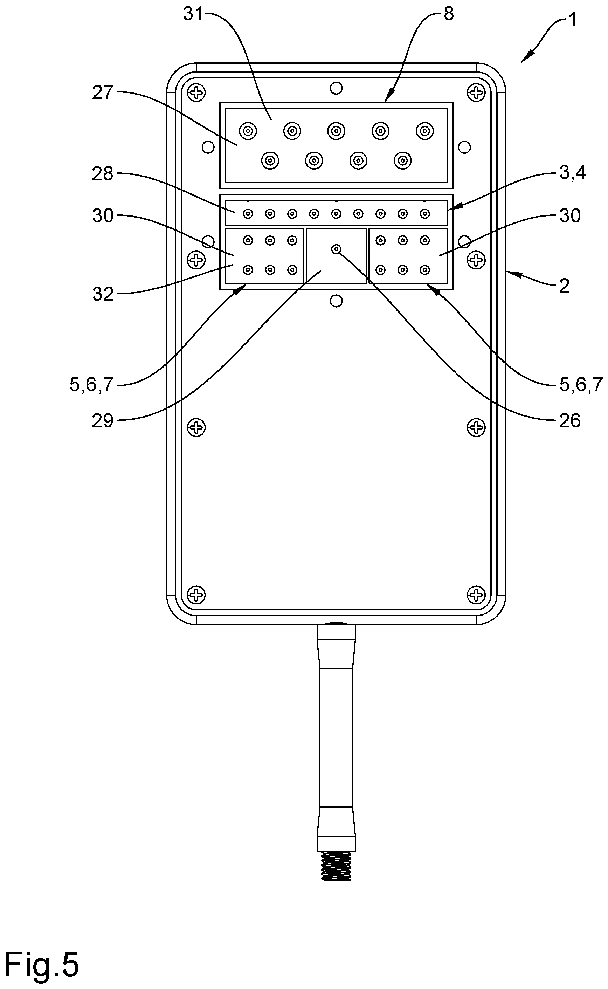

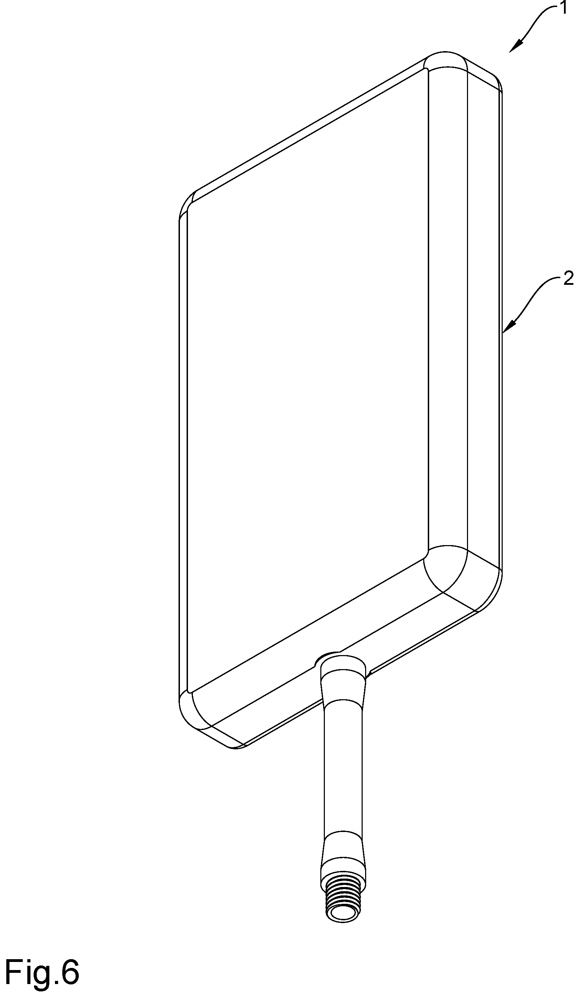

Figures 5 to 9 show a second embodiment of the device 1, wherein components identical to those of the first embodiment have the same reference numbers as in the first embodiment, to the detailed description of which reference is fully made.

The second embodiment of the device 1 differs from the first embodiment of the device 1 mainly in that the second lighting assembly 5, 6, 7 comprises at least one auxiliary lighting device 26, adapted to emit a relevant electromagnetic radiation in the visible band and in the white channel, and in that the lighting devices 3, 4, 5, 6, 7, 8 and the auxiliary lighting device 26 are associated with the supporting body 2 in a sectoral arrangement comprising:
- at least a first sector 27 in which the sixth lighting devices 8 are housed;
- at least a second sector 28, 29, 30 in which the first lighting devices 3, the second lighting devices 4, the third lighting devices 5, the fourth lighting devices 6, the fifth lighting devices 7, and the auxiliary lighting device 26 are housed.

Preferably, the auxiliary lighting device 26 is of the LED type.

For example, the auxiliary lighting device 26 is an LED manufactured using Thrive technology.

Usefully, and with reference to the particular embodiment shown in Figures 5 to 9, the second sector 28, 29, 30 comprises at least one main subsector 28, the third lighting devices 3 and the second lighting devices 4 being arranged substantially in alignment within the main subsector 28.

Advantageously, and again with reference to Figures 5 to 9, the second sector 28, 29, 30 comprises at least one central subsector 29, the auxiliary lighting device 26 being arranged within the central subsector 29, and at least two lateral subsectors 30 arranged on either side of the central subsector 29, the third lighting devices 5, the fourth lighting devices 6, and the fifth lighting devices 7 being arranged within the lateral subsectors 30.

Usefully, the central subsector 29 and the lateral subsectors 30 are arranged substantially in alignment, and the main subsector 28 is placed between the first sector 27 and the central subsector 29 and between the first sector 27 and the lateral subsectors 30.

One of the key features distinguishing the first embodiment from the second one is that the latter comprises the auxiliary lighting device 26 for emitting white light.

The technical effect associated with this particular design choice lies in that it is possible to generate direct white light, which is qualitatively different (and often superior in terms of color rendering index) compared to white light obtained by combining the three RGB channels.

This provides a visible light source more similar to natural light for observation or color photography.

In addition, the presence of the auxiliary lighting device 26 allows reducing the amount of blue fraction in the emitted radiation, which could distort or otherwise complicate the analysis carried out on photosensitive materials such as e.g. prints and watercolors. Furthermore, the presence of the auxiliary lighting device 26 also allows for greater color accuracy when taking a photo or using the lamp to observe details. Furthermore, according to the second embodiment, the lighting devices 3, 4, 5, 6, 7, 8, and the auxiliary lighting device 26 have been arranged in a sectoral configuration. The technical effect of this choice can be seen in the functional segmentation of the device 1.

Specifically, grouping the lighting devices 3, 4, 5, 6, 7, 8, and the auxiliary lighting device 26 by function (UV, IR, Visible) into distinct physical areas potentially allows for simpler management, differentiated thermal control, or optimization of the positioning of filters and optics for each specific group.

Advantageously, the main subsector 28 comprises both lighting devices 3, 4 that emit radiation with a wavelength of 750 nm, and lighting devices 3, 4 that emit radiation with a wavelength of 850 nm, as well as lighting devices 3, 4 that emit radiation with a wavelength of 940 nm.

Preferably, the lighting devices 3, 4 are switched on, if required, individually for each wavelength, so as to allow the operator to choose the most suitable wavelength.

Advantageously, the device 1 comprises at least a first filtering element 31, arranged where the first sector 27 is located and adapted to filter the radiation in the visible band emitted by the sixth lighting devices 8, and at least a second filtering element 32, arranged where the second sector 28, 29, 30 is located and adapted to promote the transmittance of the electromagnetic radiation in the visible and infrared bands.

The first filtering element 31 is preferably made of glass.

For example, the first filtering element 31 is made of the UG 11 type glass.

The first filtering element 31 is substantially a bandpass filter that allows ultraviolet radiation (at 365 nm) to pass through but completely blocks light in the visible band. This allows for the generation of a "pure" UV radiation source, eliminating the so-called "visible tail".

In this regard, it is necessary to note that UV LEDs, by their very nature, emit a small but significant amount of visible light (typically violet-blue in color) which, if present, is reflected by the manufactured article under analysis and "could contaminate" the luminescence image, leading to an overestimation of the phenomenon or to incorrect interpretations.

Thanks to the first filtering element 31, it can substantially be ensured that the captured visible light originates solely from the manufactured article's response and not from the light source.

Preferably, the second filtering element 32 is made of glass.

For example, the second filtering element 32 is made of quartz glass.

The presence of the second filtering element 32 allows obtaining that nearly all of the radiation emitted by the LEDs (both visible and infrared) reaches the manufactured article, thus ensuring accurate measurements, sharper images, and potentially shorter exposure times.

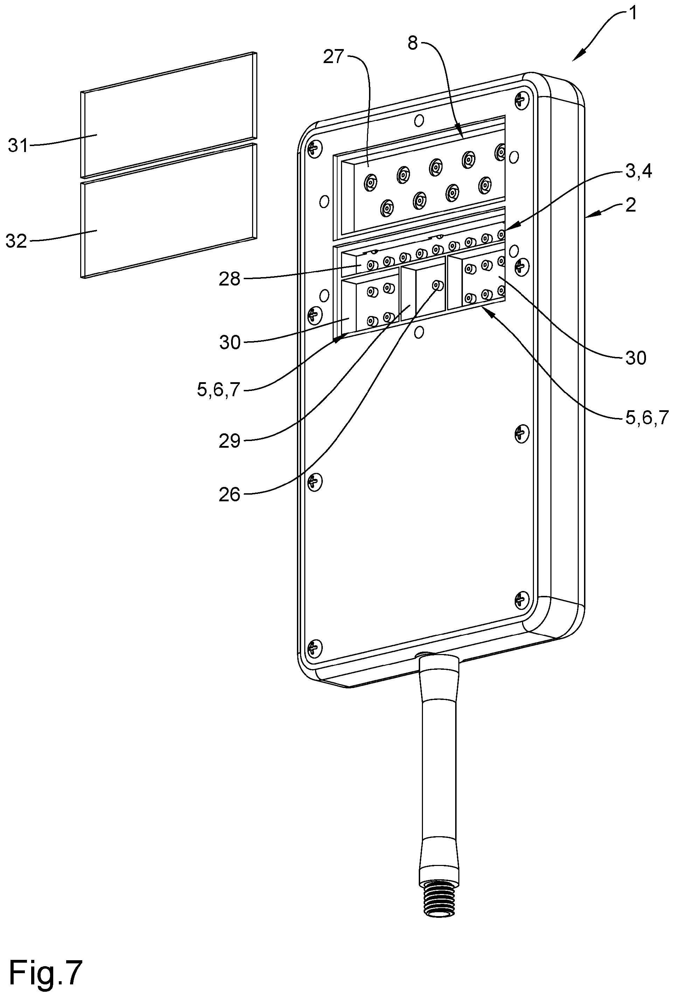

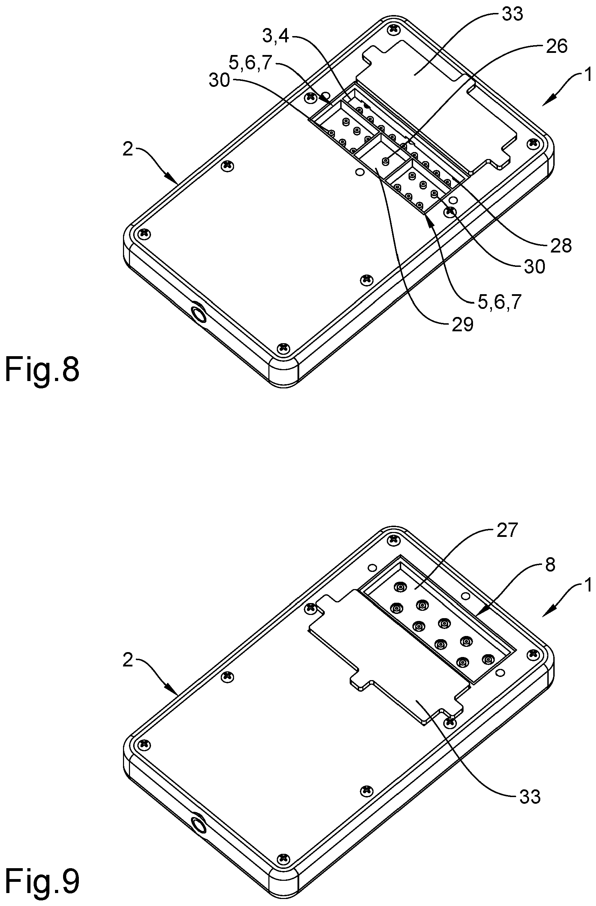

Usefully, the device 1 comprises at least one cover element 33 associated movable with the supporting body 2, between at least one position of non-use, wherein it is moved away from the supporting body 2 (Figures 5 and 7), at least a first position of use (Figure 8), wherein it is allocated where the first sector 27 is located to dim the sixth lighting devices 8, and at least a second position of use (Figure 9), wherein it is allocated where the second sector 28, 29, 30 is located to dim the first lighting devices 3, the second lighting devices 4, the third lighting devices 5, the fourth lighting devices 6, the fifth lighting devices 7, and the auxiliary lighting device 26.

The main function of the cover element 33 is to serve as a selective and dynamic optical shield, and its purpose is not simply to "cover", but to ensure spectral purity during the various modes of analysis, thus fixing a technical problem known as light contamination. In actual facts, when one sector of the lamp is active (for example, the UV sector for a luminescence analysis), its light spreads into the environment and can strike the surfaces of the LEDs that are off in the other sector (the Visible/Infrared one).

These LEDs, even when off, can passively reflect a portion of this light, which would then be captured by the camera.

This parasitic reflection constitutes "noise" that overlaps the useful signal, distorting the analysis.

The cover element 33, when positioned over the VIS/IR sector during a UV analysis, prevents any UV radiation from reaching the visible and infrared LEDs, thereby preventing the passive reflection thereof.

Conversely, when the cover element 33 is positioned over the UV sector during a visible or infrared analysis, it prevents light from these channels from reflecting off the components in the UV sector.

In summary, its function is to mechanically isolate the lighting sectors, ensuring that the only light reaching the camera sensor is the light resulting from the interaction between the active source and the artistic manufactured article.

Advantageously, the device 1 made according to the second embodiment comprises at least one housing compartment, formed where the supporting body 2 is located and adapted to contain the components responsible for handling the lighting assemblies 3, 4, 5, 6, 7, 8 and the auxiliary lighting device 26.

In a further aspect, the present invention relates to a lighting system 15 for multiband imaging of artistic manufactured articles.

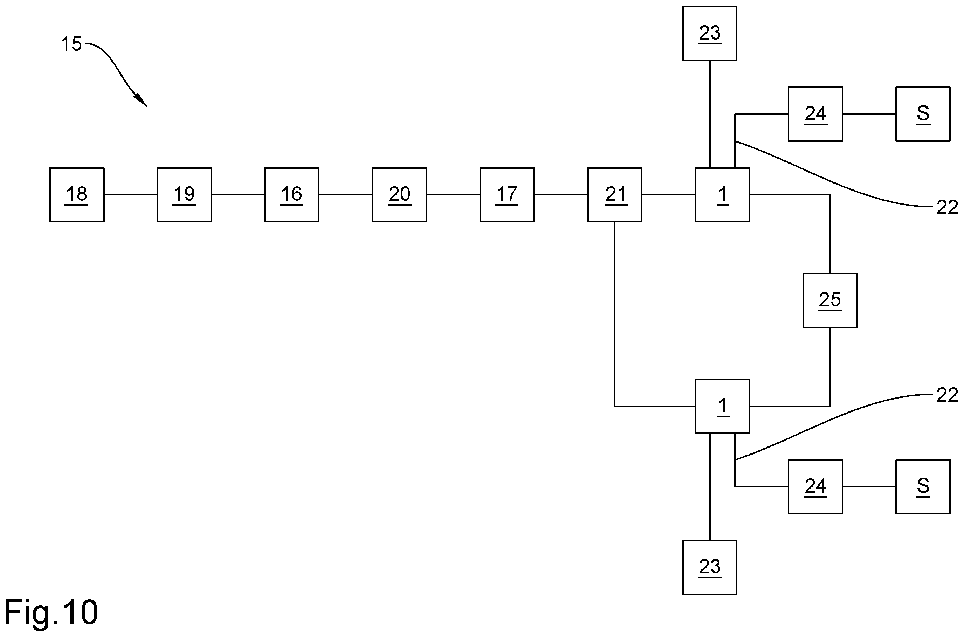

The system 15 is schematically shown in Figure 10.

The system 15 comprises:
- at least one lighting device 1 for multiband imaging of artistic manufactured articles according to one or more of the embodiments described above;
- at least one control assembly 16, 17 operationally connected to the device 1 and operationally configured to manage the operation thereof;
- at least one management and control unit 18 operationally connected to the control assembly 16, 17 and operationally configured to process at least one input signal to be sent to the control assembly 16, 17, the control assembly 16, 17 being operationally configured to process at least one operating datum of the device 1 based on the input signal;
- at least one sending/receiving assembly 19, 20, 21 operationally configured to transmit the input signal from the management and control unit 18 to the control assembly 16, 17 and the operating datum from the control assembly 16, 17 to the device 1.

For example, the management and control unit 18 is of the computer type, operationally configured to process an input signal that is then supplied to the device 1 itself by the control assembly 16, 17.

Specifically, a user of the device 1 can, via the management and control unit 18, issue operating and management commands to the device 1, particularly to the relevant lighting assemblies 3, 4, 5, 6, 7, 8.

Preferably, the control assembly 16, 17 comprises:
- at least a first DMX controller 16 operationally configured to receive the input signal from the management and control unit 18;
- at least a second DMX controller 17 operationally configured to receive the input signal from the first DMX controller 16 and to process the operating datum based on the input signal.

The second DMX controller 17 directly controls the lighting devices 3, 4, 5, 6, 7, 8 and the auxiliary lighting device 26 of the device 1.

The operating datum comprises at least a command to turn on or off one or more of the lighting devices 3, 4, 5, 6, 7, 8 and the auxiliary lighting device 26.

The operating datum comprises at least one command to adjust the energy flux of one or more of the electromagnetic radiations emitted by one or more of the lighting devices 3, 4, 5, 6, 7, 8 and/or by the auxiliary lighting device 26.

In actual facts, the user of the device 1, via the management and control unit 18, can directly command the switching on and off of the various lighting devices 3, 4, 5, 6, 7, 8 and/or of the auxiliary lighting device 26 and modulate the luminous intensity of the electromagnetic radiation emitted thereby.

In actual facts, the user of the device 1 can manage the operation of the various lighting devices 3, 4, 5, 6, 7, 8 and/or of the auxiliary lighting device 26 remotely, that is, without necessarily having to go directly in the proximity of the device 1 itself.

For example, the user of the device 1 can position the supporting body 2 itself, possibly using the standing means 14, where the artistic manufactured article to be analyzed is located.

From the management and control unit 18, the user can control the device 1 itself, e.g. by selecting which lighting devices 3, 4, 5, 6, 7, 8 to turn on or off and adjusting the intensity of the light flux emitted by those same lighting devices 3, 4, 5, 6, 7, 8, without actually interacting directly therewith.

From the management and control unit 18, the user can also control whether to turn the auxiliary lighting device 26 on or off and/or to adjust the intensity of the light flux emitted by the same auxiliary lighting device 26.

This particular technical expedient proves to be particularly useful when the artistic manufactured article is at a particularly awkward position and it may be difficult for an operator to position themselves and work directly on the device 1.

Usefully, the sending/receiving assembly 19, 20, 21 comprises:
- first transmission/receiving means 19 adapted to transmit the input signal from the management and control unit 18 to the first DMX controller 16;
- second transmission/receiving means 20 adapted to transmit the input signal from the first DMX controller 16 to the second DMX controller 17;
- third transmission/receiving means 21 adapted to transmit the operating datum from the second DMX controller 17 to the lighting assemblies 3, 4, 5, 6, 7, 8 of the device 1.

Preferably, the first transmission/receiving means 19 comprise at least one connection cable with a USB connector placed between the management and control unit 18 and the first DMX controller 16.

For example, the second transmission/receiving means 20 comprise a transmission device of the wireless type, operationally connected to the first DMX controller 16, and a receiving device of the wireless type, operationally connected to the second DMX controller 17.

Preferably, the third transmission/receiving means 21 comprise a data transmission cable placed between the second DMX controller 17 and the lighting devices 3, 4, 5, 6, 7, 8 and the auxiliary lighting device 26.

Usefully, the second DMX controller 17 is operationally configured to manage the lighting devices 3, 4, 5, 6, 7, 8, and the auxiliary lighting device 26 separately and independently from each other.

With reference to the particular embodiment shown in the figures, the system 15 comprises two devices 1.

Still referring to the figures, the third transmission/receiving means 21 comprise two data transmission cables, each of the devices 1 being connected to the second DMX controller 17 by interposition of a respective data transmission cable.

The management and control unit 18 and the control assembly 16, 17 are operationally configured to manage each of the devices 1 independently of the other of the devices 1. The system 15 comprises power supply means 22, 23, 24 adapted to supply electrical power to the device 1 and comprising at least one of either an electrical cable 22, connectable to an external source S of electrical energy, or a storage device 23 of electrical energy.

The presence of the storage device 23 allows the device 1 to be powered electrically both when the external source S is present and when it is not.

Advantageously, the power supply means 22, 23, 24 comprise a converter device 24 connected along the electrical cable 22, placed between the device 1 and the external power source S and adapted to convert the voltage of the electrical current coming from the external power source S into an operating voltage for the device 1.

For example, the converter device 24 converts the mains voltage (220 V) into a lower operating voltage (e.g., 24 V).

Thanks to the presence of the converter device 24, the device 1 operates at low voltage, thus minimizing the health risk to operators arising from the presence of live equipment. Usefully, the system 15 comprises at least one auxiliary control device 25 of the device 1, operationally configured to receive at least one command signal from a remote electronic control device and to generate at least one operational signal of the device 1. Preferably, the auxiliary control device 25 is of the type of a Casambi controller and is operationally connected to the device 1 and to an electronic remote control device via the communication means of the wireless type (e.g., implementing a Bluetooth communication protocol).

The remote electronic control device is, e.g., of the type of a smartphone, a tablet, or a personal computer.

The remote electronic control device is operationally configured to implement a relevant control application through which an operator can control the device 1.

Usefully, in the event that the system 15 comprises a device made according to the second embodiment, the control assembly 16, 17, the management and control unit 18, the sending/receiving assembly 19, 20, 21, the auxiliary control device 25, and the power supply means 22, 23, 24 are at least partly housed within the containment compartment defined by the supporting body 2.

It has in practice been ascertained that the described invention achieves the intended objects, and in particular, the fact is emphasized that the device and the system according to the invention allow for the attainment of reliable and objective results regarding the characterization of an artistic manufactured article.

In fact, the device and the system according to the invention allow the artistic manufactured article under investigation to be irradiated with a pre-selected electromagnetic radiation that clearly and distinctly belongs to a specific band of the electromagnetic spectrum.

This feature enables the precise emission of the electromagnetic radiation, thus eliminating parasitic radiation and avoiding the need to use expensive photographic filters to improve the radiation emitted by the light sources or captured by the camera. All of this makes it possible to obtain reliable and scientifically accurate photographs of the artistic manufactured article through a practical and simple solution.

Furthermore, the lighting device and system according to the invention are compact, easy to handle and to transport and can be used in a practical and convenient manner, even remotely.

In particular, thanks to the unique nature and conformation of the system according to the invention, it is possible to control the operation of the lighting device according to the invention even remotely, that is, without standing near the manufactured article under investigation.

## Claims

1. Lighting device (1) for multiband imaging of artistic manufactured articles, **characterized by** the fact that it comprises:
- at least one supporting body (2);
- at least a first lighting assembly (3, 4) associated with said supporting body (2) and adapted to emit at least one relevant electromagnetic radiation falling within the infrared band;
- at least a second lighting assembly (5, 6, 7) associated with said supporting body (2) and adapted to emit at least one relevant electromagnetic radiation falling within the visible band;
- at least a third lighting assembly (8) associated with said supporting body (2) and adapted to emit at least one relevant electromagnetic radiation falling within the ultraviolet band;
where said lighting assemblies (3, 4, 5, 6, 7, 8) are adapted to emit said electromagnetic radiation where an artistic manufactured article to be analyzed through multiband imaging is located.

2. Device (1) according to claim 1, **characterized by** the fact that:
- said first lighting assembly (3, 4) comprises a plurality of first lighting devices (3), each of said first lighting devices (3) being adapted to emit a relevant electromagnetic radiation falling within the infrared band and having a wavelength of between 750 nm and 940 nm;
- said first lighting assembly (3, 4) comprises a plurality of second lighting devices (4), each of said second lighting devices (4) being adapted to emit a relevant electromagnetic radiation falling within the infrared band and having a wavelength of between 750 nm and 940 nm;
- said second lighting assembly (5, 6, 7) comprises a plurality of third lighting devices (5), each of said third lighting devices (5) being adapted to emit a relevant electromagnetic radiation in the visible band and in the green channel, a plurality of fourth lighting devices (6), each of said fourth lighting devices (6) being adapted to emit a relevant electromagnetic radiation in the visible band and in the blue channel, and a plurality of fifth lighting devices (7), each of said fifth lighting devices (7) being adapted to emit a relevant electromagnetic radiation in the visible band and in the red channel;
- said third lighting assembly (8) comprises a plurality of sixth lighting devices (8), each of said sixth lighting devices (8) being adapted to emit a relevant electromagnetic radiation in the ultraviolet band and having a wavelength equal to 365 nm.

3. Device (1) according to one or more of the preceding claims, **characterized by** the fact that said second lighting assembly (5, 6, 7) comprises a plurality of auxiliary lighting devices, each of said auxiliary lighting devices being adapted to emit a relevant electromagnetic radiation in the visible band and in the white channel.

4. Device (1) according to one or more of the preceding claims, **characterized by** the fact that said lighting devices (3, 4, 5, 6, 7, 8) are of the LED type.

5. Device (1) according to one or more of the preceding claims, **characterized by** the fact that it comprises dimming means (11, 12, 13) of said lighting assemblies (3, 4, 5, 6, 7, 8) comprising:
- at least a first dimming body (11) associated with said supporting body (2) in a removable manner where said first lighting assembly (3, 4) is located;
- at least a second dimming body (12) associated with said supporting body (2) in a removable manner where said second lighting assembly (5, 6, 7) is located;
- at least a third dimming body (13) associated with said supporting body (2) in a removable manner where said third lighting assembly (8) is located.

6. Device (1) according to one or more of the preceding claims, **characterized by** the fact that second lighting assembly (5, 6, 7) comprises at least one auxiliary lighting device (26), adapted to emit a relevant electromagnetic radiation in the visible band and in the white channel, and by the fact that said lighting devices (3, 4, 5, 6, 7, 8) and said auxiliary lighting device (26) are associated with said supporting body (2) according to a sectoral arrangement comprising:
- at least a first sector (27) in which said sixth lighting devices (8) are housed;
- at least a second sector (28, 29, 30) in which said first lighting devices (3), said second lighting devices (4), said third lighting devices (5), said fourth lighting devices (6), said fifth lighting devices (7), and said auxiliary lighting device (26) are housed.

7. Device (1) according to claim 6, **characterized by** the fact that said second sector (28, 29, 30) comprises at least one main subsector (28), said third lighting devices (3) and said second lighting devices (4) being arranged substantially in alignment within said main subsector (28).

8. Device (1) according to one or more of the preceding claims 6 to 7, **characterized by** the fact that said second sector (28, 29, 30) comprises at least one central subsector (29), said auxiliary lighting device (26) being arranged within said central subsector (29), and at least two lateral subsectors (30) arranged on either side of said central subsector (29), said third lighting devices (5), said fourth lighting devices (6), and said fifth lighting devices (7) being arranged within said lateral subsectors (30).

9. Device (1) according to one or more of the preceding claims 6 to 8, **characterized by** the fact that said central subsector (29) and said lateral subsectors (30) are arranged substantially in alignment, and by the fact that said main subsector (28) is placed between said first sector (27) and said central subsector (29) and between said first sector (27) and said lateral subsectors (30).

10. Device (1) according to one or more of the preceding claims 6 to 9, **characterized by** the fact that it comprises at least a first filtering element (31), arranged where said first sector (27) is located and adapted to filter the radiation in the visible band emitted by said sixth lighting devices (8), and at least a second filtering element (32), arranged where said second sector (28, 29, 30) is located and adapted to promote the transmittance of the electromagnetic radiation in the visible and infrared bands.

11. Device (1) according to one or more of the preceding claims 6 to 10, **characterized by** the fact that it comprises at least one cover element (33) associated movable with said supporting body (2), between at least a position of non-use, wherein it is moved away from said supporting body (2), at least a first position of use, wherein it is allocated where said first sector (27) is located to dim said sixth lighting devices (8), and at least a second position of use, wherein it is allocated where said second sector (28, 29, 30) is located to dim said first lighting devices (3), said second lighting devices (4), said third lighting devices (5), said fourth lighting devices (6), said fifth lighting devices (7), and said auxiliary lighting device (26).

12. Lighting system (15) for multiband imaging of artistic manufactured articles, **characterized by** the fact that it comprises:
- at least one lighting device (1) for multiband imaging of artistic manufactured articles according to one or more of the preceding claims;
- at least one control assembly (16, 17) operationally connected to said device (1) and operationally configured to manage the operation thereof;
- at least one management and control unit (18) operationally connected to said control assembly (16, 17) and operationally configured to process at least one input signal to be sent to said control assembly (16, 17), said control assembly (16, 17) being operationally configured to process at least one operating datum of said device (1) based on said input signal;
- at least one sending/receiving assembly (19, 20, 21) operationally configured to transmit said input signal from said management and control unit (18) to said control assembly (16, 17) and said operating datum from said control assembly (16, 17) to said device (1).

13. System (15) according to claim 12, **characterized by** the fact that said control assembly (16, 17) comprises:
- at least a first DMX controller (16) operationally configured to receive said input signal from said management and control unit (18);
- at least a second DMX controller (17) operationally configured to receive said input signal from said first DMX controller (16) and to process said operating datum based on said input signal.

14. System (15) according to one or more of the preceding claims 12 to 13, **characterized by** the fact that said sending/receiving assembly (19, 20, 21) comprises:
- first transmission/receiving means (19) adapted to transmit said input signal from said management and control unit (18) to said first DMX controller (16);
- second transmission/receiving means (20) adapted to transmit said input signal from said first DMX controller (16) to said second DMX controller (17);
- third transmission/receiving means (21) adapted to transmit said operating datum from said second DMX controller (17) to said lighting assemblies (3, 4, 5, 6, 7, 8) of said device (1).

15. System (15) according to one or more of the preceding claims 12 to 14, **characterized by** the fact that it comprises power supply means (22, 23, 24) adapted to supply electrical power to said device (1) and comprising at least one of either an electrical cable (22), connectable to an external source (S) of electrical energy or one storage device (23) of electrical energy.

16. System (15) according to one or more of the preceding claims 12 to 15, **characterized by** the fact that it comprises at least one auxiliary control device (25) of said device (1) operationally configured to receive at least one command signal from a remote electronic control device and to generate at least one operational signal of said device (1).
